# EUROPÄISCHE PATENTSCHRIFT

(11) **EP 0 304 638 B1**
(45) Veröffentlichungstag und Bekanntmachung des Hinweises auf die Patenterteilung: **06.10.1993**
(21) Anmeldenummer: 88111914.3
(22) Anmeldetag: 23.07.1988
(51) Int. Cl.: H02K 9/06, H02K 9/28

(54) **Gebläse**
Ventilator
Ventilateur

(30) Priorität: 26.08.1987 DE 3728484
(43) Veröffentlichungstag der Anmeldung: 01.03.1989
(73) Patentinhaber: AURORA Konrad G. Schulz GmbH & Co, 69427 Mudau (DE)
(72) Erfinder: Schulz, Joachim, D-8762 Amorbach (DE)
(74) Vertreter: Patentanwälte Dipl.-Ing. R. Splanemann Dr. B. Reitzner Dipl.-Ing. K. Baronetzky

(56) Entgegenhaltungen:
- DE-A- 3 427 565
- FR-A- 2 412 976
- GB-A- 2 029 125

## Beschreibung

Die Erfindung betrifft ein durch einen Elektromotor angetriebenes Gebläse, gemäß dem Oberbegriff von Anspruch 1.

Bei einem derartigen Gebläse besteht das Problem, daß der Elektromotor, insbesondere bei Gebläsen größerer Leistung, zwangweise belüftet werden muß. Hierzu ist es bekannt, ein zusätzliches Lüfterrad auf der Motorwelle anzuordnen und so eine Belüftung des Elektromotors zu erzielen. Dies erfordert jedoch einerseits zusätzlichen mechanischen Aufwand, andererseits wird der Wirkungsgrad des Gebläses verschlechtert, indem nämlich für das kleine zusätzliche Lüfterrad mit vergleichsweise schlechtem Wirkungsgrad relativ viel Antriebsenergie aufgewendet werden muß. Daher ist es bekannt, im Druckbereich des Gebläses an Stellen mit geringem dynamischem Druck Saugöffnungen im Druckluftstrom vorzusehen und die hier angesaugte Luft am Elektromotor vorbeistreichen zu lassen, um diesen so zu kühlen. Die Menge der so bereitgestellten Motorkühlluft reicht jedoch nur für Motoren mit entweder geringer Leistung oder aber vergleichsweise großem Druckaufbau und entsprechend hohem dynamischem Differenzdruck aus.

Daher sind Versuche angestellt worden, im Druckluftstrom eine Luftfangschale anzuordnen und die dort gesammelte Druckluft dem Elektromotor als Kühlluft zuzuleiten. Dies verschlechtert den Wirkungsgrad des Gebläses jedoch ebenfalls stark, da die Luftfangschale nicht nur einen Teil der erzeugten Druckluft abzweigt, sondern vor allem zusätzliche Wirbel entstehen, die den Druckluftstrom beeinträchtigen.

Aus der DE-A1-34 27 565 ist ein durch einen Elektromotor angetriebenes Radialgebläse bekannt, bei welchem Kühlluft ausgangseitig eines Gebläserads abgezweigt wird, um den Motor zu durchtreten. Die Abzweigung erfolgt unmittelbar anschließend an das Gebläserad, dessen Tragschale eine Seite einer Lufteintrittsöffnung für die Kühlluft bildet. Die Tragschale soll hier mit einer ringförmigen Zone einen Dichtspalt bilden. Bei dieser Lösung ist jedoch nachteilig, daß die Luft, die eigentlich in den Kühlluft-Kanal eintreten soll, partiell immer noch von der Außenkante der Tragschale mitgerissen wird, so daß dort erhebliche Wirbel entstehen. Es bedarf somit eines beträchtlichen Unterschieds zwischen Über- und Unterdruck an beiden Enden des Kühlluft-Kanals, um eine wirksame Kühlung sicherzustellen.

Es ist daher Aufgabe der Erfindung, ein durch einen Elektromotor angetriebenes Gebläse gemäß dem Oberbegriff von Anspruch 1 zu schaffen, bei dem die Motorkühlung durch eine energetisch günstige und einbauunabhängige Kühlung des Elektromotors erreicht wird und der Aufwand für die Kühlungsmaßnahmen reduziert ist.

Diese Aufgabe wird erfindungsgemäß durch Anspruch 1 gelöst. Vorteilhafte Weiterbildungen ergeben sich aus den Unteransprüchen.

Durch die Anordnung der Lufteintrittsöffnung für die Luftleitung an dem Druckstutzen wird zunächst erreicht, daß der Druckluftstrom nicht durch Hindernisse wie eine Luftauffangschale beeinträchtigt wird. Erfindungsgemäß ist die Lufteintrittsöffnung an einer Stelle des Druckstutzens vorgesehen, welche einen dynamischen Überdruck aufweist, d.h., in der Höhe einer Erweiterung und jedenfalls nicht bei einer Engstelle. Besonders vorteilhaft ist ferner die Anordnung der Luftaustrittsöffnung für den Kühlluftstrom für den Elektromotor in dem Unterdruckbereich des Gebläserads. Dadurch ist eine überdruckunabhängige Kühlluftströmung gewährleistet. In Abhängigkeit von dem Einbau des erfindungsgemäßen Gebläses variiert nämlich der sich druckseitig aufbauende Überdruck. Demgegenüber bleibt der Saug-Unterdruck stets im wesentlichen konstant. Im Betrieb wird in der Regel davon ausgegangen, daß die Saugöffnungen des Gebläses frei liegen, die Drucköffnungen hingegen an einem Druckluftkanal angeschlossen sind. Gegenüber diesem Normalzustand nimmt der Saug-Unterdruck eingangsseitig des Gebläses bei Anordnung zusätzlicher Luftansaugklappen oder anderer Strömungwiderstände im Ansaugstrom höchstens noch zu, so daß die Saugwirkung an der Luftaustrittsöffnung für die Motorkühlluft gegenüber dem Normalfall dann eher verstärkt wird.

Besonders vorteilhaft ist ferner die Beaufschlagung lediglich des Kollektorbereichs des Elektromotors. Es hat sich gezeigt, daß hier aufgrund der Funkenbildung die stärksten Erwärmungen auftreten, die kühlungsbedürftig sind. Demgegenüber ist die Kühlung der Rotor- bzw. Statorwicklung ein geringeres Problem, das ggf. durch die Anordnung zusätzlicher Öffnungen in der Wand des Elektromotors auf der dem Kollektor gegenüberliegenden Seite gelöst werden kann. Aufgrund der Sauganordnung ist nämlich leicht eine Strömungsverteilung der Kühlluft den Bedürfnissen entsprechend einstellbar, indem beispielsweise kleine Lufteintrittsöffnungen für die Kühlung der Wicklungen und eine große Eintrittsöffnung für die Kühlung des Kollektors bereitgestellt werden, die zudem in der Regel mit Druckluft aus dem Druckstutzen des Gebläses beaufschlagt wird.

Besonders günstig ist ferner die Montageunabhängigkeit des Kühlluftstromes. Auch bei freiblasendem Gebläse, d.h., bei offenliegendem Druckanschluß, wird durch die Saugleitung ausreichend Kühlluft für den Motor bereitgestellt. Dadurch ist der Konstrukteur der Lüftungsanlage völlig frei in der Gestaltung des Druckluftkanales, ohne Kühlprobleme für den Gebläsemotor befürchten zu müssen.

Ein besonderer Vorteil liegt darin, daß durch Druckerhöhung am Druckstutzen praktisch automatisch die zur Verfügung stehende Kühlluftmenge steigt. Dies bedeutet, daß bei erhöhtem Leistungsverbrauch des Elektromotors auch die Kühlwirkung zunimmt, so daß mit ein und demselben Elektromotor ein größerer Leistungsbereich abgedeckt werden kann. Dies liegt darin begründet, daß bei Druckzunahme am Druckstutzen, d.h. bei größerer geforderter Leistung, zugleich auch der Druck an der Lufteintrittsöffnung zunimmt, so daß die dort eintretende Luftmenge, die für die Kühlung zur Verfügung steht, ebenfalls größer wird. Es zeigte sich ferner, daß die Rückführung der durch den Elektromotor erwärmten Motorkühlluft in den Ansaugbereich des Gebläses und damit die Erzeugung eines Luftkreislaufes in keiner Weise für die Kühlung nachteilig ist, da die Menge der erforderlichen Kühlluft gegenüber der Gesamtluft vernachlässigbar ist.

Gemäß einer konstruktiv besonders einfachen Variante der Erfindung läßt sich ein Teil der Luftleitung durch die ohnehin für den Flansch des Gebläse-Druckstutzens erforderliche Dichtung bereitstellen, indem nämlich die Luftleitung in dem Flansch als U-förmige Ausnehmung hinterschneidungsfrei vorgesehen ist und die fehlende Wand der Luftleitung durch die Dichtung gebildet wird. Für die Luftleitung ist dann lediglich noch eine kurze Stichleitung zum Gebläsemotor-Gehäuse hin erforderlich.

Für die Ausbildung der Luftaustrittsöffnung ist es günstig, einen Schlauch, ein Rohrstück od. dgl. mit dem Gehäuse an der kollektornahen Stirnseite des Elektromotors zu verbinden und diese bis in den Unterdruckbereich des Gebläserads hineinragen zu lassen.

Als Gebläserad kommt ein Querstromläufer, insbesondere ein Trommelläufer, oder ein Axialrad in Betracht, wobei es jeweils günstig ist, den Bereich maximalen Unterdrucks für die Luftaustrittsöffnung zu verwenden.

Ein weiterer Vorteil liegt darin, daß das erfindungsgemäße Gebläse kompakt baut und für die Montage keine Besonderheiten zu beachten sind und insbesondere keine frei liegenden Öffnungen, deren Bedeutung dem Gebläseverwender nicht bekannt ist, in besonderer Art und Weise lufttechnisch beachtet zu werden brauchen.

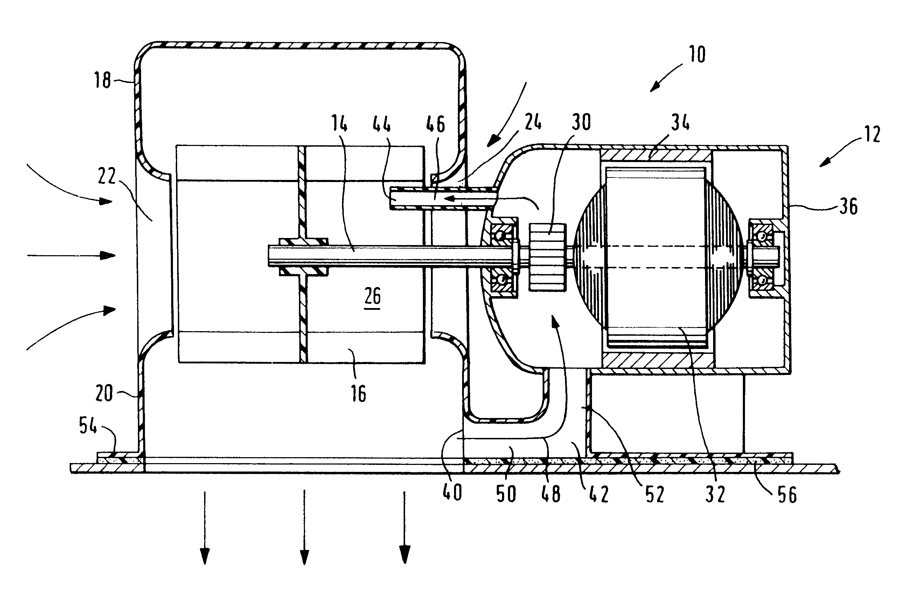

Weitere Vorteile, Einzelheiten und Merkmale eines Ausführungsbeispiels der Erfindung werden in der folgenden Beschreibung anhand der Zeichnung näher erläutert, die einen schematischen Längsschnitt durch ein erfindungsgemäßes Gebläse mit angeflanschtem Elektromotor zeigt.

In der Figur weist das Gebläse 10 einen Elektromotor 12 auf, dessen Welle 14 ein Gebläserad 16 trägt. Das Gebläserad 16 ist von einem Gebläsegehäuse 18 umgeben, das einen Druckstutzen 20 aufweist, über welchen die von dem Gebläse erzeugte Druckluft abgegeben wird, sowie zwei Saugöffnungen 22 und 24, die je axial in Verlängerung des Gebläserads 16 ausgebildet sind. Das Gebläserad 16 ist als Trommelläufer ausgebildet, so daß der Innenraum des Gebläserads 16 einen Saugraum 26 bildet.

Der Elektromotor 12 weist einen Kollektor 30, einen Rotor 32 sowie einen Stator 34 auf und ist von einem Gehäuse 36 umgeben.

Seitlich in dem Druckstutzen ist eine Lufteintrittsöffnung 40 angeordnet. Eine Luftleitung 42 führt von der Lufteintrittsöffnung 40 zu dem Gehäuse 36 des Elektromotors 12.

Ferner ist eine Luftaustrittsöffnung 44 in dem Saugraum 26 vorgesehen, mit der das Gehäuse 36 des Elektromotors 12 über eine Abluftleitung 46 verbunden ist.

Die Luftleitung 42 und die Abluftleitung 46 sind so mit dem Gehäuse 36 verbunden, daß durch den Kühlluftstrom 48 der Kollektor 30 des Elektromotors 12 diagonal umflossen wird.

Die Luftleitung 42 besteht aus einem sich achsparallel erstreckenden Teil 50 und einem sich im wesentlichen radial zu der Motorachse erstreckenden Teil 52. Das achsparallele Teil 50 der Luftleitung 42 ist als einseitig offene Ausnehmung in einem Flansch 54 ausgebildet, mit dem das Gebläse 10 montiert wird. Ferner ist der Flansch 54 mit einer Dichtung 56 abgedeckt, die beispielsweise aus einer 3 mm starken Schicht geschlossenporigen Schaumstoffs bestehen kann. Die Dichtung 56 ragt dabei über den Teil 50, so daß aus dem Zusammenwirken der einseitig offenen Ausnehmung in dem Flansch 54 und der diese abdeckenden Dichtung 56 ein Kanal ausgebildet wird, der den Teil 50 der Luftleitung 42 bildet.

Vorzugsweise ist die Dichtung 56 fertig vormontiert, beispielsweise auf den Flansch aufgeklebt.

Während die Luftleitung 42 vorzugsweise als Kunststoff-Druck- oder Spritzguß-Teil einstückig mit dem Flansch 54 ausgebildet ist, kann die Abluftleitung 46 vorzugsweise aus einem Gummi- oder Kunststoffröhrchen bestehen, das in das Gehäuse 36 eingeschnappt gehalten ist.

Wahlweise kann die Luftaustrittsöffnung 44 unter Weglassung einer separaten Abluftleitung 46 auch als Ausnehmung in der Wand des Elektromotor-Gehäuses 36 vorgesehen sein, nämlich dann, wenn ausreichend Unterdruck an der sogenannten Motorkappe herrscht und die Kühlluftbedürfnisse für den Elektromotor geringer sind.

Besonders vorteilhaft läßt sich aber mit der erfindungsgemäßen Ausbildung ein Höchstmaß an Leistung auch dann mit einem Motor erzielen, wenn er klein baut und der Kollektor vergleichsweise wenig gekühlt wird, ohne daß produktionstechnisch wesentliche Kosten entstehen.

Wahlweise können auch in der kollektorfernen Stirnwand des Elektromotor-Gehäuses 36 weitere Öffnungen vorgesehen sein, die in der Zeichnung nicht dargestellt sind. Dann ergibt sich automatisch ein weiterer Kühlluftstrom durch den Spalt zwischen Rotor 32 und Stator 34, der die Motorwicklungen kühlt. Dieser Kühlluftstrom wird mit dem Kühlluftstrom 48 im Bereich der Abluftleitung 46 zusammengeführt.

## Patentansprüche

1. Durch einen Elektromotor angetriebenes Gebläse, mit einem Gebläserad (16), einem Saugstutzen (26) und einem Druckstutzen (20), wobei eine Luftleitung (42) zu dem Gehäuse (36) des Elektromotors (12) führt, die die Luftleitung (42) durchtretende Luft mindestens den Kollektorbereich (30) des Elektromotors (12) beaufschlagt und eine Luftaustrittsöffnung (44) für die Luft vorgesehen ist, die mit dem Unterdruckbereich des Gebläserads (16) in Strömungsverbindung steht, dadurch gekennzeichnet, daß der Druckstutzen (20) eine Lufteintrittsöffnung (40) der Luftleitung (42) aufweist und der Strömungsquerschnitt des Druckstutzens (20) größer als der des Gebläseaustritts ausgebildet ist.

2. Gebläse nach Anspruch 1, dadurch gekennzeichnet, daß die Lufteintrittsöffnung (40) in der Seitenwand des Druckstutzens (20) angeordnet ist.

3. Gebläse nach Anspruch 1 oder 2, dadurch gekennzeichnet, daß die Lufteintrittsöffnung (40) hinterschneidungsfrei in dem Druckstutzen (20) seitlich angeordnet und die Luftleitung (42) als einstückig mit dem Druckstutzen (20) verbundenes Teil ausgebildet ist.

4. Gebläse nach einem der Ansprüche 1 bis 3, dadurch gekennzeichnet, daß der Druckstutzen (20) einen Flansch (54) aufweist, der in eingebautem Zustand des Gebläses von einer Flanschdichtung (56) abgedeckt ist, und daß die Flanschdichtung (56) einen Teil der Wand der Luftleitung (42) bildet.

5. Gebläse nach einem der vorhergehenden Ansprüche, dadurch gekennzeichnet, daß die Luftaustrittsöffnung (44) mit einer Abluftleitung (46) verbunden ist, welche sich in den Bereich maximalen Unterdrucks auf der Unterdruckseite des Gebläserads (16) erstreckt.

6. Gebläse nach Anspruch 5, dadurch gekennzeichnet, daß die Abluftleitung (46) als Gummischlauch oder als Kunststoffröhrchen ausgebildet ist.

7. Gebläse nach einem der vorhergehenden Ansprüche, dadurch gekennzeichnet, daß der Anschluß der Luftleitung (42) seitlich neben dem Kollektor in dem Gehäuse (36) des Elektromotors (12) vorgesehen und daß der Anschluß für die Abluftleitung (46) diesem Anschluß, bezogen auf den Kollektor (30), diagonal gegenüberliegend in dem Gehäuse (36) angeordnet ist.

8. Gebläse nach Anspruch 7, dadurch gekennzeichnet, daß der Kollektor (30) des Elektromotors (12) auf der dem Gebläserad (16) zugewandten Seite des Elektromotors (12) angeordnet ist.

9. Gebläse nach einem der vorhergehenden Ansprüche, dadurch gekennzeichnet, daß die Luftaustrittsöffnung (44) in einer Stirnwand des Motors und der Anschluß der Luftleitung (42) seitlich in dem Gehäuse (36) des Elektromotors (12) in unmittelbarer Nachbarschaft zu dieser Stirnwand angeordnet ist.

10. Gebläse nach einem der vorhergehenden Ansprüche, dadurch gekennzeichnet, daß ein weiterer Anschluß für den Luftzutritt an dem dem Kollektor (30) gegenüberliegenden Ende des Elektromotors (12) vorgesehen ist, wobei der Strömungswiderstand zwischen dem weiteren Anschluß und der Luftaustrittsöffnung (44) erheblich größer als der Strömungswiderstand zwischen dem Anschluß für die Luftleitung (42) und der Luftaustrittsöffnung (44) ist.

11. Gebläse nach einem der vorhergehenden Ansprüche, dadurch gekennzeichnet, daß ein Radialgebläse, insbesondere ein Querstromgebläse, oder ein Trommelläufer verwendet wird.

## Claims

1. A blower driven by an electric motor having an impeller (16), an intake connection (26) and a pressure connection (20), wherein an air duct (42) leads to the housing (36) of the electric motor (12), the air passing through the air duct (42) acts at least on the commutator zone (30) of the electric motor (12) and an air-outlet opening (44) is provided for the air which is in flow communication with the underpressure zone of the impeller (16), characterised in that the pressure connection (20) has an air-inlet opening (40) of the air duct (42) and the flow cross-section of the pressure connection (20) is larger than that of the blower outlet.

2. A blower according to Claim 1, characterised in that the air-inlet opening (40) is disposed in the side wall of the pressure connection (20).

3. A blower according to Claim 1 or 2, characterised in that the air-inlet opening (40) is disposed laterally of the pressure connection (20) free of any undercut, and the air duct (42) is formed as a part connected integrally with the pressure connection (20).

4. A blower according to Claims 1 to 3, characterised in that the pressure connection (20) has a flange (54) which in an installed condition of the blower is covered by a flange seal (56), and in that the flange seal (56) then forms part of the wall of the air duct (42).

5. A blower according to any one of the preceding claims, characterised in that the air-outlet opening (44) is connected with an exhaust air duct (46) which extends into the region of maximum underpressure on the underpressure side of the impeller (16).

6. A blower according to Claim 5, characterised in that the exhaust air duct (46) is in the form of a rubber hose or a plastics pipe.

7. A blower according to any one of the preceding claims, characterised in that the air conduit (42) is connected laterally of and near to the commutator in the housing (36) of the electric motor (12) and in that the exhaust air duct (46) is connected to the housing (36), relative to the commutator (30), diagonally across from where said air duct is connected.

8. A blower according to Claim 7, characterised in that the commutator (30) of the electric motor (12) is disposed on the side of the electric motor (12) nearest the impeller (16).

9. A blower according to any one of the preceding claims, characterised in that the air-outlet opening (44) is disposed in an end wall of the motor, with said air duct (42) being connected laterally in the housing (36) of the electric motor (12) in the immediate vicinity of said end wall.

10. A blower according to any one of the preceding claims, characterised in that a further connection for the air inlet is provided at the end of the electric motor (12) opposite the commutator (30), wherein the resistance to flow between the further connection and the air outlet opening (44) is considerably greater than resistance to flow between the connection for the air duct (42) and the air outlet opening (44).

11. A blower according to any one of the preceding claims, characterised in that a radial-flow blower, in particular a transverse-flow blower, or a drum rotor is used.

## Revendications

1. Ventilateur entraîné par un moteur électrique, avec une roue de ventilateur (16), un tube d'aspiration (26) et un tube de refoulement (20), dans lequel une conduite d'air (42) mène au capot (36) du moteur électrique (12), l'air traversant la conduite d'air (42) sollicite au moins la zone du collecteur (30) du moteur électrique (12), et une ouverture de sortie d'air (44) est prévue pour l'air et reliée en circulation avec la zone de dépression de la roue de ventilateur (16), caractérisé en ce que le tube de refoulement (20) présente une ouverture d'entrée d'air (40) de la conduite d'air (42) et la section d'écoulement du tube de refoulement (20) est plus grande que la sortie du ventilateur.

2. Ventilateur selon la revendication 1, caractérisé en ce que l'ouverture d'entrée d'air (40) est disposée dans la paroi latérale du tube de refoulement (20).

3. Ventilateur selon la revendication 1 ou 2, caractérisé en ce que l'ouverture d'entrée d'air (40) est disposée latéralement sans retrait dans le tube de refoulement (20) et la conduite d'air (42) est conçue comme une partie reliée d'un seul tenant avec le tube de refoulement (20).

4. Ventilateur selon l'une ou l'ensemble des revendications 1 à 3, caractérisé en ce que le tube de refoulement (20) présente une bride (54), qui est couverte à l'état monté du ventilateur par une garniture d'étanchéité de bride (56), et en ce que la garniture d'étanchéité de bride (56) forme une partie de la paroi de la conduite d'air (42).

5. Ventilateur selon l'une ou l'ensemble des revendications précédentes, caractérisé en ce que l'ouverture de sortie d'air (44) est reliée avec une conduite d'échappement d'air (46), qui s'étend dans la zone de dépression maximale sur le côté de dépression de la roue de ventilateur (16).

6. Ventilateur selon la revendication 5, caractérisé en ce que la conduite d'échappement d'air (46) est conçue comme un tuyau de caoutchouc ou un tube de matière plastique.

7. Ventilateur selon l'une ou l'ensemble des revendications précédentes, caractérisé en ce que le raccordement de la conduite d'air (42) est prévu latéralement près du collecteur dans le capot (36) du moteur électrique (12) et en ce que le raccord pour la conduite d'échappement d'air est disposé à l'opposé en diagonale de ce raccord dans le capot (36), par rapport au collecteur (30).

8. Ventilateur selon la revendication 7, caractérisé en ce que le collecteur (30) du moteur électrique (12) est disposé sur le côté du moteur électrique (12) orienté vers la roue de ventilateur (16).

9. Ventilateur selon l'une ou l'ensemble des revendications précédentes, caractérisé en ce que l'ouverture de sortie d'air (44) est disposée dans une paroi frontale du moteur et le raccord de la conduite d'air (42) disposé latéralement dans le capot (36) du moteur électrique (12) à proximité immédiate de cette paroi frontale.

10. Ventilateur selon l'une ou l'ensemble des revendications précédentes, caractérisé en ce qu'un autre raccord pour l'arrivée d'air est prévu à l'extrémité du moteur électrique (12) opposée au collecteur (30), la résistance à l'écoulement entre l'autre raccord et l'ouverture de sortie d'air (44) étant nettement plus grande que la résistance à l'écoulement entre le raccord pour la conduite d'air (42) et l'ouverture de sortie d'air (44).

11. Ventilateur selon l'une ou l'ensemble des revendications précédentes, caractérisé en ce qu'un ventilateur radial, en particulier un ventilateur à courant transversal ou un rotor cylindrique, est utilisé.
